# EUROPEAN PATENT SPECIFICATION

(11) **EP 4 701 421 B1**
(45) Date of publication and mention of the grant of the patent: **27.05.2026**
(21) Application number: 24771911.5
(22) Date of filing: 11.09.2024
(51) Int. Cl.: A23B 80/00

(54) **A METHOD OF MAKING A COATED CONFECTIONARY PRODUCT**
VERFAHREN ZUR HERSTELLUNG EINES BESCHICHTETEN KONFEKTPRODUKTS
PROCÉDÉ DE PRODUCTION D'UN PRODUIT DE CONFISERIE ENROBÉ

(30) Priority: 11.09.2023 US 202363537691 P; 26.09.2023 GB 202314762
(43) Date of publication of application: 04.03.2026
(73) Proprietor: New Cibo Vita LLC, Totowa, New Jersey 07512 (US)
(72) Inventor: BLEIEL, Sinead, Dublin, D02 RW27 (IE); OZAVAR, Samil, Totowa, New Jersey 07512 (US); IMAMOGLU, Emre, Totowa, New Jersey 07512 (US); FAN, Yaxin, Totowa, New Jersey 07512 (US)
(74) Representative: Purdylucey Intellectual Property
(86) International application number: PCT/EP2024/075409
(87) International publication number: WO 2025/056630

(56) References cited:
- EP-B1- 1 496 752
- EP-B1- 1 643 850
- CN-U- 204 070 383
- KR-A- 20100 091 432
- US-A1- 2009 110 773
- US-A1- 2009 208 609

## Description

The present disclosure relates to an edible product comprising a solid center and a coating of fatty material, and a method for the production thereof. In particular, the disclosure relates to confectionary products comprising a fruit center with a yoghurt or chocolate coating. Methods for coating edible cores by panning and spraying are known from e.g. US2009/0208609A1.

### Summary

In one aspect, there is provided a method of producing an edible product comprising a solid center and a plurality of coats of a coating material, the method comprising the steps according to claim 1.

The process is controlled to apply thin coats of coating material on to the center such that after each coating, the edges and corners of the center remain visible. This can be accentuated by using a center that is a first colour and a coating material having a second colour that contrasts with the first colour. For example, the center may be red (e.g. strawberry fruit gel) and the coating material may be white or pink (yoghurt), golden (peanut butter) or chocolate.

In any embodiment, the solid center has a 3-D shape consisting of corners, edges and one or more faces (ideally flat faces).

The applicant has discovered that when this process is applied with a solid center having a 3-D shape consisting of corners, edges and one or more faces, the step of panning the center without spraying causes the coating material to coalesce on the face(s) of the center, providing a convex coating on the faces. This has the effect of rounding the edible product. One or more further rounds of panning/spraying and panning/no spraying enhances this rounding effect.

In any embodiment, the centre has a cuboid shape.

In any embodiment, the edible product is generally spherical (e.g. no sharp edges or corners).

In any embodiment, the centre is cuboid and has a first colour and the coating has a second colour that contrasts with the first colour. The first colour may be dark colour (e.g. red or purple). The second colour may be a colour lighter than the dark colour, e.g. white, cream or pink.

In any embodiment, a surface of the edible product comprises a pattern comprising edges and/or corners of the centre visible through the coating of coating material.

In any embodiment, the pattern comprises a plurality of lines corresponding to edges of the cuboid centre.

In any embodiment, the pattern comprises a plurality of triangular markings corresponding to corners of the cuboid centre.

In any embodiment, the step of coating the center with the inner coat comprises a first coating step comprising simultaneously spraying the coating material and panning to form a first inner coat and a second coating step comprising simultaneously spraying the coating material on the first coat and panning to provide a second inner coat.

In any embodiment, the or each coating step comprises intermittently spraying the coating material.

In any embodiment, the step of intermittent spraying of the coating material comprises spraying steps separated by non-spraying steps, in which each non-spraying step last for 1 to 10 seconds.

In any embodiment, the outer coat comprises a heat sensitive active agent. This is typically part of the first outer coat of coating material.

In any embodiment, the heat sensitive active agent comprises encapsulated probiotic bacteria.

In any embodiment, the process comprises a step of drying the first outer coat by panning the coated center without spraying prior to application of the second outer coat.

In any embodiment, the process comprises applying a final outer coat of a coating material to the coated center.

In any embodiment, the process comprises applying 2, 3, 4, 5, 6 or 7 outer coats.

In any embodiment, the process comprises a drying period between each coating step. The drying step may comprise a resting step comprising panning (e.g. rotation of the drum) without spraying.

In any embodiment, air is circulated inside the panning apparatus (e.g. panning drum) during one or more of the coating or drying steps.

In any embodiment, one or more of the coating steps comprises spraying the coating material at a spraying rate of 5 to 10 Hz.

In any embodiment, the spraying rate applied at each spraying step is gradually reduced from thee first coating step to a final coating step.

In any embodiment, the edible product is a coated confectionary product.

In any embodiment, the yoghurt comprises one or more acacia extract, Carnuba wax, Cocoa butter, typically in any amount of 0.001-0.0005% (w/w) of final product.

Also described is an edible product comprising a solid center and a plurality of coats of a coating material formed according to a method of the disclosure.

Also described is an edible product comprising a solid center and a plurality of coats of a coating material, in which the center has a 3-D shape comprising edges, corners and faces, in which the center is a first colour and the coating material is a second colour that contrasts with the first colour, wherein a surface of the edible product comprises a pattern comprising corners of the centre visible through the coats of coating material.

In any embodiment, the pattern comprising corners and edges of the centre visible through the coats of coating material.

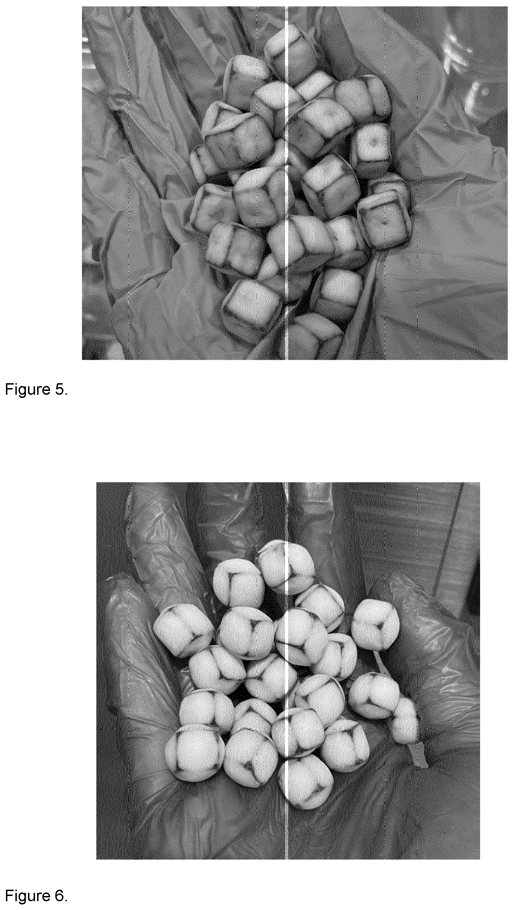

In any embodiment, the edible product comprises a surface pattern substantially as shown in Figure 5.

Also described is an edible product substantially as shown in Figure 5.

Other aspects and preferred embodiments of the invention are defined and described in the other claims set out below.

### Brief Description of the Figures

**Figure 1****.** Yoghurt wafers in melting tank prior to heating at 60°C and mixing for 30 seconds ever 5 minutes until yoghurt is melted.
**Figure 2****.** Semi-melted yoghurt wafers in melting tank, prior to total melting.
**Figure 3****.** Completely melted yoghurt wafers in melting tank.
**Figure 4****.** Fruit piece cubes with first yoghurt coating
**Figure 5****.** Fruit piece cubes with second yoghurt coating
**Figure 6****.** Round edible confectionary product after application of third yoghurt coating

### Detailed Description of the Invention

Where used herein and unless specifically indicated otherwise, the following terms are intended to have the following meanings in addition to any broader (or narrower) meanings the terms might enjoy in the art:
Unless otherwise required by context, the use herein of the singular is to be read to include the plural and *vice versa.* The term "a" or "an" used in relation to an entity is to be read to refer to one or more of that entity. As such, the terms "a" (or "an"), "one or more," and "at least one" are used interchangeably herein.

As used herein, the term "comprise," or variations thereof such as "comprises" or "comprising," are to be read to indicate the inclusion of any recited integer (e.g. a feature, element, characteristic, property, method/process step or limitation) or group of integers (e.g. features, element, characteristics, properties, method/process steps or limitations) but not the exclusion of any other integer or group of integers. Thus, as used herein the term "comprising" is inclusive or openended and does not exclude additional, unrecited integers or method/process steps.

As used herein, the term "edible product" refers to a product suitable for oral administration to human and animals, for example a food product, a confectionary product, a nutritional supplement or a pharmaceutical product. Examples include coated nut, fruit pieces, fruit and/or nut clusters, coated caramels, fruit gels, coated gummies, lozanges.

As used herein, the term "center" refers to the center of the food product that is coated in a fatty material. The centre is usually solid, e.g. a solid fruit piece or a gelled edible material such as a fruit gel. Examples of centers include fruit gels, nuts, fruit pieces, and nut clusters, for example dried fruits pieces, peanut brittle pieces, roasted nuts, pretzel balls / plant protein balls / malted milk balls, raisins, macadamia, hazelnuts, gelatin gum pieces, fruit loops, caramels, pectin, cashews, pistachios, corn flakes. fruit clusters and fruit & nut clusters. According to the invention, the center has a 3-D shape comprises corners, edges and flat faces. Examples include cubes, cuboids, prisms (e.g. triangular prism, pentagonal prism, hexagonal prism, etc) pyramids (e.g. square, hexagonal, etc), tetrahedron, octahedron, dodecahedron, etc..

As used herein, the term "fruit gel" typically refers to a product made from fruit pulp or containing fruit or fruit extracts that is heated and then allowed to cool and gel in a shaped mold to form a shaped fruit gel. The fruit gel may be any shape, such as cuboid, round, oval, pyramidical. The fruit gel may comprise pectin or a different gelling agent. The fruit gel generally comprises added sugar (e.g. sucrose). In one embodiment, the fruit gel is free of added sugar, and includes an added sweetener, such as a polyol, allulose or sucralose, and optionally includes a fibre.

As used herein the term "fatty material" refers to a food material that is solid at room temperature and configured for phase transition to a liquid upon heating. Examples include yoghurts, peanut butter and chocolate. The fatty material may contain added sugar or sweeteners, preservatives, colouring agents and the like. Generally, the fatty material comprises at least 20%, 25% or 30% fat (w/w). The edible product may have two or more coats of the same fatty material, or a coat of one fatty material and a second coat of a different fatty material, for example an outer coat of yoghurt and an inner coat of peanut butter, or *vica versa.*

As used herein, the term "panning" refers to a well-known process in which a material is coated onto a solid center by moving the center while simultaneously applying a coating material to the center. The process is usually performed in a rotating drum, with or without the circulation of air or other atmosphere modification. the frequency of rotation may be modified to compensate for the weight of the product increasing the process as coating is added to the material. Panning a product results in the application of a coating to the product, and the process parameters can be modified to achieve a partial or complete coating and various levels of moisture in the applied coat.

As used herein, the term "probiotic" refers to live beneficial bacteria and/or yeasts that naturally live in your body. Probiotics help keep your body healthy and working well, including fighting off bad bacteria when you have too much of it, helping you feel better. The probiotics employed in the invention may comprise a combination of different probiotics. Though there are many types of bacteria that can be considered probiotics, there are two specific types of bacteria that are common probiotics found in stores. These include Lactobacillus and Bifidobacterium. The term includes spore-forming and non-spore forming bacteria.

As used herein, the term "encapsulated probiotic" refers to a live probiotic encapsuled within a food grade plant protein. As used herein, the term "plant protein" refers to a protein preparation obtained from a plant source. Examples include plant protein powders, plant protein concentrates and plant protein isolates. Plant protein preparations can be obtained from pea, zein, barley, spelt, soya, seaweed, hemp, seiten (wheat gluten), chickpea, tofu, lentil, mung bean, quinoa and other plant sources. Plant proteins having an isoelectric point above pH 5, 5.5 or 6 are preferred. Typically the encapsulated probiotic is made in a process characterised by at least 60%, 65%, 70%, 75%, 80%, 85% or 90%. Typically, the encapsulated probiotic are gastric resistant and ileal sensitive. This means that the microparticles can pass through a human stomach intact and break up in the ileum releasing the probiotic payload. Methods of making encapsulated probiotics are described in Examples 1 to 22 of WO 2023/144354.

### Exemplification

The invention will now be described with reference to specific Examples. These are merely exemplary and for illustrative purposes only: they are not intended to be limiting in any way to the scope of the monopoly claimed or to the invention described. These examples constitute the best mode currently contemplated for practicing the invention.

### Examples

### Flavoring Yoghurt wafer

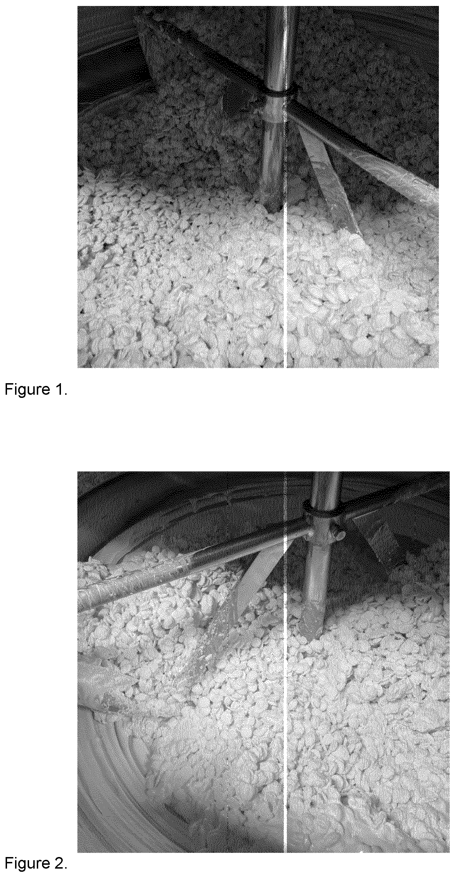

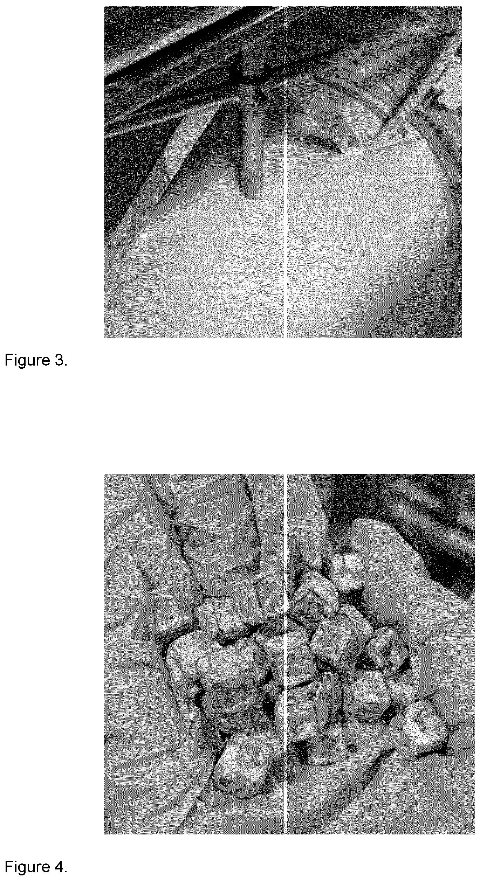

1. Add 400 lbs yoghurt into the melting tank at 60 °C and mix for 30 seconds every 5 minutes. Figure 1
2. Wait 30 minutes until a certain amount of yoghurt is melted and turn on mixer to promote even melting at 60 °C. Figure 2
3. Wait 60 minutes until all the yogurt wafers are melted completely and lower the heating temperature to 55 °C. Figure 3
4. Add 8 lbs strawberry flavor and mix evenly for half an hour in the melting ensuring the flavored yogurt temperature does not exceed 55 °C. Flavor ratio is 2%.
5. Pump flavoured yogurt to storage tank at 45 °C .
6. Check the temperature of yogurt inside the storage tank every two hours to ensure temperature does not exceed 45 °C.

### Adding Strawberry Fruit Pieces with Yoghurt Coating

1. Turn of cold air and fan of panning machine.
2. Set temperature of the HVAC system at 10°C and check the displayed temperature on the PLC. should read 10°C-13°C.
3. Set humidity of HVAC system at 35 and check the displayed humidity on the PLC - should read 35-45.
4. Start drum forward rotation.
5. Add boxes of strawberry fruit pieces into the drum.
6. Prepare 2.5 lbs probiotic L. Rhamnosus 001 in an alcohol - cleaned, water-free container.

### First Coating Step

Use the following conditions to complete the first coating step.

Spraying pump speed 7 Hz.
1.

| | |
|---|---|
| Spray Time | 5 seconds |
| Stop Time | 2 seconds |
| Drum Forward Speed | 80Hz |
| Fan (Air) | Off |
| Time Length | 7 minutes |

2.

| | |
|---|---|
| Spray Time | 7 seconds |
| Stop Time | 2 seconds |
| Drum Forward Speed | 55 Hz |
| Fan (Air) | Off |
| Time Length | 3 minutes |

3.

| | |
|---|---|
| Spray Time | **0 seconds** |
| Stop Time | 0 seconds |
| Drum Forward Speed | 55 Hz |
| Fan (Air) | Off |
| Time Length | 5 minutes |

Ensure the edge of the fruit center is exposed after this step, with no yoghurt peeling off the corners. The temperature of the partly coated product at this stage is 23-24°C.

See Figure 4.

### Second Coating Step

Use the following conditions to complete the second coating step.

Spraying pump speed 7 Hz.
1.

| | |
|---|---|
| Spray Time | 5 seconds |
| Stop Time | 2 seconds |
| Drum Forward Speed | 40 Hz |
| Fan (Air) | On |
| Fan Frequency | 30 Hz |
| Time Length | 10 minutes |

Ensure the edge of the fruit center is exposed after this step, with no yoghurt peeling off the corners.
See Figure 5
2.

| | |
|---|---|
| Spray Time | **0 seconds** |
| Stop Time | 0 seconds |
| Drum Forward Speed | 20 Hz |
| Fan (Air) | On |
| Fan Frequency | 100 Hz |
| Time Length | 5 minutes |

### Third Coating Step

Use the following conditions to complete the third coating step. Spraying pump speed 7 Hz.
1.

| | |
|---|---|
| Spray Time | 5 seconds |
| Stop Time | 2 seconds |
| Drum Forward Speed | 40 Hz |
| Fan (Air) | Off |
| Time Length | 5 minutes |

Add 2.5 lbs of probiotic powder during this step.
2.

| | |
|---|---|
| Spray Time | 5 seconds |
| Stop Time | 2 seconds |
| Drum Forward Speed | 40 Hz |
| Fan (Air) | On |
| Fan Frequency | 50 Hz |
| Time Length | 15 minutes |

Stop spraying at the 10^{th} minute for gap drying 1 minute and then continue spraying.
3.

| | |
|---|---|
| Spray Time | 5 seconds |
| Stop Time | 2 seconds |
| Drum Forward Speed | 30 Hz |
| Fan (Air) | On |
| Fan Frequency | 100 Hz |
| Time Length | 65 minutes (give or take depending on weight). |

Stop spraying when the individual weight is 1.25g-1.28g, or the total weight of 10 pieces is 12.5-12.8 g.
See Figure 6

### Release and store the probiotic yoghurt covered fruit pieces

1. Rotate with 100 Hz air with drum speed 10 Hz for 5-10 minutes.
2. Release the product when the temperature of product is at most 21 °C.
3. Release the products.
4. After the drum rotates for one cycle, discharge and control the releasing speed.
5. Collect the products and allow settle until the temperature of product is 17°C-19 °C.
6. Transfer the product to clean box for packaging.

## Claims

1. A method of producing an edible product comprising a solid center and a plurality of coats of a coating material, the method comprising the steps of:
providing a solid centre of the edible product;
coating the center with an inner coat of coating material comprising simultaneously panning the center and spraying the coating material on to the center;
panning the coated center without spraying the coating material to dry the coated center;
applying a first outer coat of coating material to the coated centre comprising simultaneously panning the coated center and spraying the coating material on to the coated center; and
applying a second outer coat of coating material to the coated centre comprising simultaneously panning the coated center and spraying the coating material on to the coated center,
wherein the solid centre has a 3D shape consisting of corners, edges and flat surfaces whereby a surface of the edible product comprises a pattern comprising corners of the centre visible through the coating of coating material.

2. A method according to Claim 1 in which the centre has a cuboid shape.

3. A method according to Claim 1 or 2 in which the centre has a cuboid shape and the edible product is generally spherical.

4. A method according to any preceding Claim in which the centre is cuboid and has a first colour and the coating has a second colour that contrasts with the first colour.

5. A method according to any preceding Claim in which the pattern comprises a plurality of lines corresponding to edges of the cuboid centre.

6. A method according to any preceding Claim in which the step of coating the center with the inner coat comprises a first coating step comprising simultaneously spraying the coating material and panning to form a first inner coat and a second coating step comprising simultaneously spraying the coating material on the first coat and panning to provide a second inner coat.

7. A method according to any preceding Claim in which the or each coating step comprises intermittently spraying the coating material.

8. A method according to Claim 7 in which the step of intermittent spraying of the coating material comprises spraying steps separated by non-spraying steps, in which each non-spraying step last for 1 to 10 seconds.

9. A method according to any preceding Claim in which the process comprises a step of drying the first outer coat by panning the coated center without spraying prior to application of the second outer coat.

10. A method according to any preceding Claim in which the coating material is selected from yoghurt, peanut butter and chocolate.

11. A method according to any preceding Claim in which the center is selected from a fruit gel and a dehydrated fruit piece.

12. A method according to Claim 11, in which the center comprises a fruit gel without added sugar, and in which the fruit gel comprises a low-calorie sweetener.

13. A method according to Claim 12 in which the low-calorie sweetener comprises a polyol, allulose or sucralose.

14. A method according to Claim 12 or 13 in which the fruit gel comprises fibre.

15. A method according to any preceding Claim in which one of the coats of coating material comprises an encapsulated probiotic bacteria.

## Patentansprüche

1. Verfahren zur Herstellung eines essbaren Produkts, das einen festen Kern und eine Vielzahl von Schichten eines Beschichtungsmaterials umfasst, wobei das Verfahren die folgenden Schritte umfasst:
Bereitstellen eines festen Kerns des essbaren Produkts;
Beschichten des Kerns mit einer inneren Schicht von Beschichtungsmaterial, das das gleichzeitige Schwenken des Kerns und Sprühen des Beschichtungsmaterials auf den Kern umfasst;
Schwenken des beschichteten Kerns ohne Sprühen des Beschichtungsmaterials, um den beschichteten Kern zu trocknen;
Auftragen einer ersten äußeren Schicht von Beschichtungsmaterial auf den beschichteten Kern, das das gleichzeitige Schwenken des beschichteten Kerns und Sprühen des Beschichtungsmaterials auf den beschichteten Kern umfasst; und
Auftragen einer zweiten äußeren Schicht von Beschichtungsmaterial auf den beschichteten Kern, das das gleichzeitige Schwenken des beschichteten Kerns und Sprühen des Beschichtungsmaterials auf den beschichteten Kern umfasst,
wobei der feste Kern eine 3D-Form aufweist, die aus Ecken, Kanten und flachen Oberflächen besteht, wodurch eine Oberfläche des essbaren Produkts ein Muster umfasst, das Ecken des Kerns umfasst, die durch die Beschichtung von Beschichtungsmaterial sichtbar sind.

2. Verfahren nach Anspruch 1, in dem der Kern eine kubische Form aufweist.

3. Verfahren nach Anspruch 1 oder 2, in dem der Kern eine kubische Form aufweist und das essbare Produkt allgemein kugelförmig ist.

4. Verfahren nach einem vorstehenden Anspruch, in dem der Kern kubisch ist und eine erste Farbe aufweist und die Beschichtung eine zweite Farbe aufweist, die mit der ersten

5. Verfahren nach einem vorstehenden Anspruch, in dem das Muster eine Vielzahl von Linien umfasst, die Kanten des kubischen Kerns entsprechen.

6. Verfahren nach einem vorstehenden Anspruch, in dem der Schritt des Beschichtens des Kerns mit der inneren Schicht Folgendes umfasst: einen ersten Beschichtungsschritt, der gleichzeitiges Sprühen des Beschichtungsmaterials und Schwenken zur Bildung einer ersten inneren Schicht umfasst, und einen zweiten Beschichtungsschritt, der gleichzeitiges Sprühen des Beschichtungsmaterials auf die erste Schicht und Schwenken zur Bereitstellung einer zweiten inneren Schicht umfasst.

7. Verfahren nach einem vorstehenden Anspruch, in dem der oder jeder Beschichtungsschritt intermittierendes Sprühen des Beschichtungsmaterials umfasst.

8. Verfahren nach Anspruch 7, in dem der Schritt des intermittierenden Sprühens des Beschichtungsmaterials Sprühschritte umfasst, die durch Nicht-Sprühschritte getrennt sind, in dem jeder Nicht-Sprühschritt 1 bis 10 Sekunden andauert.

9. Verfahren nach einem vorstehenden Anspruch, in dem der Prozess einen Schritt des Trocknens der ersten äußeren Schicht durch Schwenken des beschichteten Kerns ohne Sprühen vor der Auftragung der zweiten äußeren Schicht umfasst.

10. Verfahren nach einem vorstehenden Anspruch, in dem das Beschichtungsmaterial aus Joghurt, Erdnussbutter und Schokolade ausgewählt ist.

11. Verfahren nach einem vorstehenden Anspruch, in dem der Kern aus einem Fruchtgelee und einem Trockenfrüchtestück ausgewählt ist.

12. Verfahren nach Anspruch 11, in dem der Kern ein Fruchtgelee ohne zugesetzten Zucker umfasst und in dem das Fruchtgelee einen kalorienarmen Süßstoff umfasst.

13. Verfahren nach Anspruch 12, in dem der kalorienarme Süßstoff ein Polyol, Allulose oder Sucralose umfasst.

14. Verfahren nach Anspruch 12 oder 13, in dem das Fruchtgelee Ballaststoff umfasst.

15. Verfahren nach einem vorstehenden Anspruch, in dem eine der Schichten von Beschichtungsmaterial ein verkapseltes probiotisches Bakterium umfasst.

## Revendications

1. Procédé de production d'un produit comestible comportant un centre solide et une pluralité de couches d'une matière d'enrobage, le procédé comportant les étapes consistant à :
fournir un centre solide du produit comestible ;
enrober le centre d'une couche intérieure de matière d'enrobage comportant les étapes consistant simultanément à faire pivoter le centre et à pulvériser la matière d'enrobage sur le centre ;
faire pivoter le centre enrobé sans pulvériser la matière d'enrobage pour sécher le centre enrobé ;
appliquer une première couche extérieure de matière d'enrobage sur le centre enrobé, étape qui comporte les étapes consistant simultanément à faire pivoter le centre enrobé et à pulvériser la matière d'enrobage sur le centre enrobé ; et
appliquer une deuxième couche extérieure de matière d'enrobage sur le centre enrobé, étape qui comporte les étapes consistant simultanément à faire pivoter le centre enrobé et à pulvériser la matière d'enrobage sur le centre enrobé,
dans lequel le centre solide a une forme tridimensionnelle constituée d'angles, de bords et de surfaces plates, ce par quoi une surface du produit comestible comporte un motif comportant des angles du centre qui sont visibles au travers de l'enrobage de matière d'enrobage.

2. Procédé selon la revendication 1, dans lequel le centre a une forme cubique.

3. Procédé selon la revendication 1 ou la revendication 2, dans lequel le centre a une forme cubique et le produit comestible est généralement sphérique.

4. Procédé selon l'une quelconque des revendications précédentes, dans lequel le centre est cubique et a une première couleur et l'enrobage a une deuxième couleur qui contraste avec la première couleur.

5. Procédé selon l'une quelconque des revendications précédentes, dans lequel le motif comporte une pluralité de lignes qui correspondent aux bords du centre cubique.

6. Procédé selon l'une quelconque des revendications précédentes, dans lequel l'étape consistant à enrober le centre avec la couche intérieure comporte une première étape d'enrobage qui comporte les étapes consistant simultanément à pulvériser la matière d'enrobage et à faire pivoter pour former une première couche intérieure et une deuxième étape d'enrobage qui comporte les étapes consistant simultanément à pulvériser la matière d'enrobage sur la première couche et à faire pivoter pour fournir une deuxième couche intérieure.

7. Procédé selon l'une quelconque des revendications précédentes, dans lequel la ou chaque étape d'enrobage comporte l'étape consistant à pulvériser de la matière d'enrobage de manière intermittente.

8. Procédé selon la revendication 7, dans lequel l'étape consistant à pulvériser de la matière d'enrobage de manière intermittente comporte des étapes de pulvérisation séparées par des étapes de non-pulvérisation, dans lesquelles chaque étape de non-pulvérisation dure de 1 à 10 secondes.

9. Procédé selon l'une quelconque des revendications précédentes, dans lequel le processus comporte une étape consistant à sécher la première couche extérieure en faisant pivoter le centre enrobé sans pulvérisation avant l'application de la deuxième couche extérieure.

10. Procédé selon l'une quelconque des revendications précédentes, dans lequel la matière d'enrobage est sélectionnée parmi du yaourt, du beurre de cacahuètes et du chocolat.

11. Procédé selon l'une quelconque des revendications précédentes, dans lequel le centre est sélectionné parmi un gel de fruit et un morceau de fruit déshydraté.

12. Procédé selon la revendication 11, dans lequel le centre comporte un gel de fruit sans sucre ajouté, et dans lequel le gel de fruit comporte un édulcorant hypocalorique.

13. Procédé selon la revendication 12, dans lequel l'édulcorant hypocalorique comporte du polyol, de l'allulose ou du sucralose.

14. Procédé selon la revendication 12 ou la revendication 13, dans lequel le gel de fruit comporte de la fibre.

15. Procédé selon l'une quelconque des revendications précédentes, dans lequel l'une des couches de matière d'enrobage comporte une bactérie probiotique encapsulée.
